# EUROPEAN PATENT SPECIFICATION

(11) **EP 0 483 785 B1**
(45) Date of publication and mention of the grant of the patent: **01.03.1995**
(21) Application number: 91118490.1
(22) Date of filing: 29.10.1991
(51) Int. Cl.: G11B 5/187, G11B 5/127

(54) **Magnetic recording and/or reproducing method and magnetic head for effecting said method**
Verfahren zur magnetischen Aufnahme und/oder Wiedergabe und Magnetkopf zur Durchführung der Methode
Méthode d'enregistrement et/ou de reproduction magnétique et tête magnétique pour exécuter cette méthode

(30) Priority: 31.10.1990 JP 295718/90
(43) Date of publication of application: 06.05.1992
(73) Proprietor: MATSUSHITA ELECTRIC INDUSTRIAL CO., LTD., Kadoma-shi, Osaka-fu, 571 (JP)
(72) Inventor: Suzuki, Shigeo, Hirakata-shi, Osaka-fu (JP); Inoue, Isamu, Neyagawa-shi, Osaka-fu (JP); Shintaku, Hidenobu, Neyagawa-shi, Osaka-fu (JP); Kodama, Kayoko, Osaka-shi, Osaka-fu (JP)
(74) Representative: Eisenführ, Speiser & Partner

(56) References cited:
- PATENT ABSTRACTS OF JAPAN vol. 8, no. 248 (P-313)(1685) 14 November 1984 & JP-A-59 119 524 ( SUWA SEIKOSHA K.K. ) 10 July 1984
- PATENT ABSTRACTS OF JAPAN vol. 12, no. 439 (P-788)(3286) 18 November 1988 & JP-A-63 168 805 ( HITACHI MAXELL LTD ) 12 July 1988
- PATENT ABSTRACTS OF JAPAN vol. 14, no. 482 (P-1119)19 October 1990 & JP-A-2 193 307 ( NEC KANSAI LTD ) 31 July 1990

## Description

### BACKGROUND OF THE INVENTION

### Field of the Invention

The present invention relates to a magnetic recording and/or reproducing method and also to a magnetic head utilizable to accomplish such method.

### Description of the Prior Art

To meet the recent demands for a sophistication of high density magnetic recording of information, extensive attempts have been made to make, available to consumer-oriented products, a thin-film magnetic recording medium comprising a substrate on which a magnetic recording layer is formed by depositing magnetic material. The currently developed thin-film magnetic recording medium contains a high content of magnetic material and is excellent in magnetic properties and suited for a high density recording of information because the manufacture thereof does not require the use of any binder which has hitherto been used to form the magnetic recording layer on the substrate as is the case with the conventional magnetic recording medium of painted type.

As in the case of the conventional painted magnetic recording medium, the thin-film magnetic recording medium is also available in two types depending on the manner in which information is magnetically recorded: the longitudinal magnetic recording type and the perpendicular magnetic recording type.

Of the various thin-film magnetic recording media, the thin-film magnetic recording medium suited for longitudinal recording (hereinafter referred to as "ME tape"), known as a metal-evaporated magnetic recording tape, has already been made available in the market. This ME tape is manufactured by vapor-depositing a Co-Ni alloy slantwise onto a surface of a substrate while a reaction is taking place between the Co-Ni alloy and oxygen.

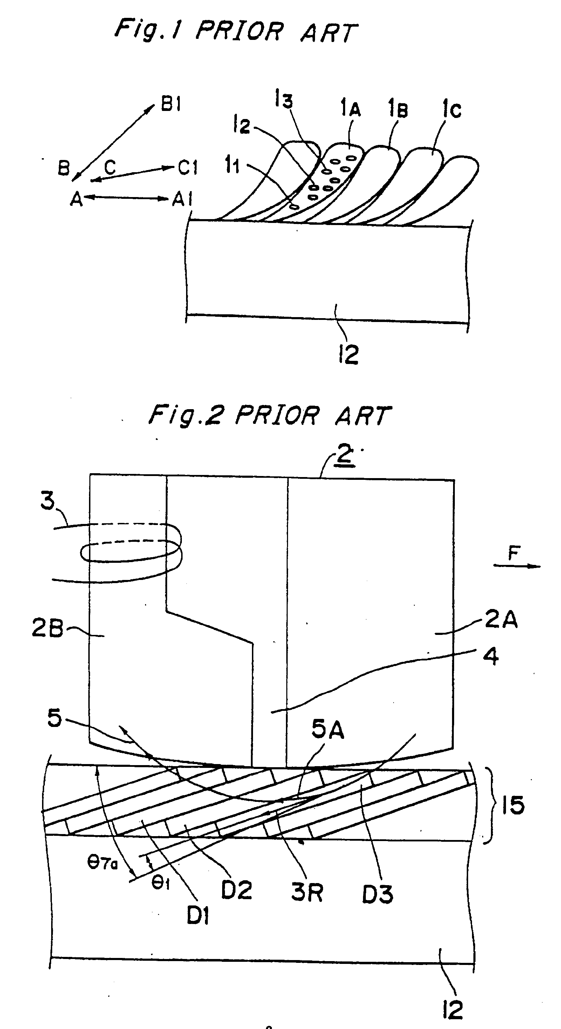

The structure of the currently available ME tape is schematically illustrated in Fig. 1 in a longitudinal sectional representation taken in a direction parallel to the direction of movement of a magnetic head. Since the ME tape is manufactured by the use of the slantwise vapor deposition technique, minute magnetic particles of a generally ivory shape, only three of which are identified by 1_{A}, 1_{B} and 1_{C}, are deposited on the substrate 12. Each of the ivory-shaped minute magnetic particles, for example the magnetic particle 1_{A}, is comprised of magnetic microparticles, only three of which are identified by 1₁, 1₂ and 1₃, each having an easily magnetizable axis oriented in a direction A-A1 parallel to a surface of the resultant magnetic recording tape. Accordingly, the ME tape is referred to as a longitudinal recording medium having the easily magnetizable axis lying in the direction A-A1.

However, the magnetic microparticles 1₁, 1₂ and 1₃ of each minute magnetic particle 1_{A}, 1_{B} and 1_{C} on the substrate 12 are piled up to represent the generally ivory shape of the associated minute magnetic particle 1_{A}, 1_{B} and 1_{C} and, due to this shape, each minute magnetic particle 1_{A}, 1_{B} and 1_{C} also has an easily magnetizable axis lying in a direction B-B1 generally parallel to the longitudinal axis of the associated minute magnetic particle 1_{A}, 1_{B} and 1_{C}. However, since the ease of magnetization in the direction B-B1 is lower than that in the direction A-A1, the ME tape as a whole has a easily magnetizable axis lying in a direction C-C1 inclined a slight angle from the direction A-A1 towards the direction B-B1.

Because of the presence of the angle of inclination, the density of information recorded on the ME tape varies with the direction of movement of the magnetic head.

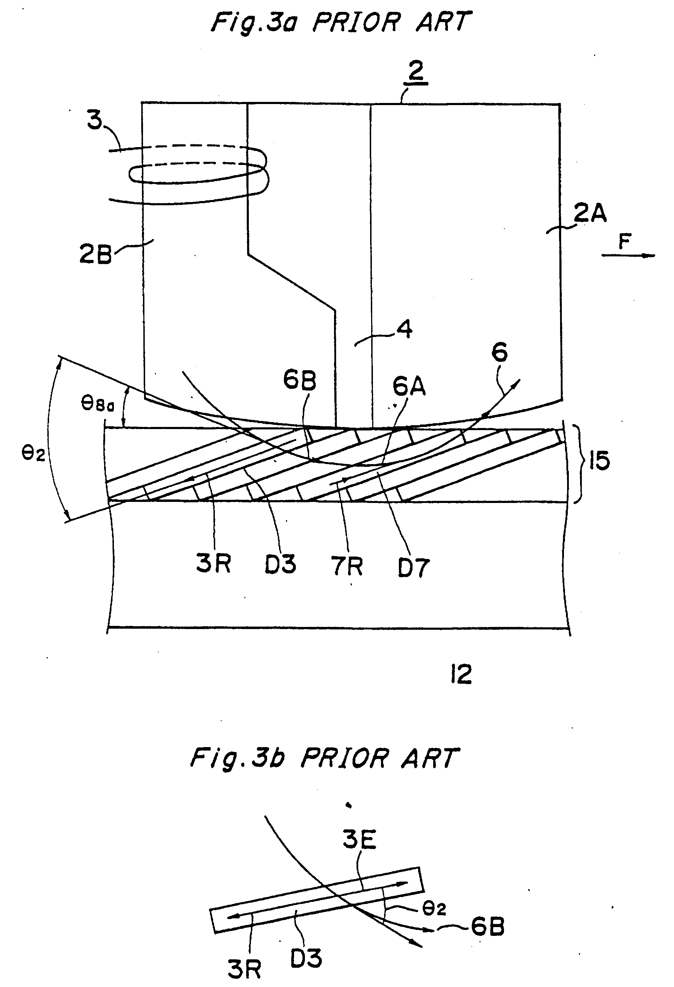

The cause of this variation of the information recording density will now be discussed with reference to Figs. 2 and 3. In Fig. 2, reference characters D1, D2 and D3 represent diagrammatic representations of three of the ivory-shaped minute magnetic particles 1_{A}, 1_{B} and 1_{C} shown in Fig. 1, each having a longitudinal axis shown as lying in the direction of the easily magnetizable axis, it being to be noted that, for the purpose of discussion, the angle of inclination of the direction C-C1 shown in Fig. 1 is somewhat exaggerated to have a greater value than that in Fig. 1 relative to the direction A-A1.

As shown therein, the magnetic microparticles D1, D2 and D3 aggregate to form a longitudinal magnetic recording layer 15 on the substrate 12. A ring-type magnetic head is generally identified by 2 and comprises a pair of cores 2A and 2B and a coil 3 wound around the core 2B and has a recording gap 4 defined between the cores 2A and 2B.

When in operation for recording information, the coil 3 is electrically energized to produce a leakage magnetic field 5 across a portion of the magnetic gap 4 adjacent the magnetic recording tape while the magnetic head 2 as a whole is moved in a direction shown by an arrow F relative to the substrate 12.

A portion 5A of the leakage magnetic field 5 on a leading side of the magnetic head 2 with respect to the direction of movement thereof relative to the substrate 12 is utilized to record the minute magnetic particle D3 in a direction shown by an arrow 3R in Fig. 2. The less an angle ϑ1 of intersection between the direction of that portion 5A of the leakage magnetic field 5 and the easily magnetizable direction of the minute magnetic particle D3, the more the information is recorded.

Let it be assumed that, when the magnetic head 2 is subsequently moved to the position shown in Fig. 3a, the direction of flow of the electric current across the coil 3 is reversed to produce a leakage magnetic field 6 counter to the leakage magnetic field 5 referred to above.

Under these circumstances, a portion 6A of the leakage magnetic field 6 on a leading side of the magnetic head 2 records the minute magnetic particle D7 in a direction shown by an arrow 7R in Fig. 3a.

At this time, at a trailing side of the magnetic head 2, an interaction between the minute magnetic particle D3 and that portion 6B of the leakage magnetic field 6 on a trailing side is such as shown in Fig. 3b. In other words, the magnetic field 6B causes a magnetic field component 3E, which is counter to the arrow-headed direction 3R in which the minute magnetic particle D3 was magnetized, and acts on the minute magnetic particle D3 thereby to degauss the magnetism 3R of the minute magnetic particle D3. The smaller an intersection angle ϑ2, the higher this degaussing.

When the recording is made with the magnetic head 2, the magnetic head 2 moves relative to the minute magnetic particles and, therefore, in practice, the minute magnetic particles are affected by magnetic fields acting thereon from various directions.

For the sake of brevity, while the magnetic field which varies continuously and participates in recording on the minute magnetic particle D3 is illustrated by way of a single line 5A of magnetic field, and the magnetic field that varies continuously and participates in degaussing of the minute magnetic particle D3 is illustrated by way of a single line 6B of magnetic field, it is assumed that the minute magnetic field D3 can be recorded only by the magnetic field 5A and can be degaussed only by the magnetic field 6A.

In a similar manner, the description will now be made.

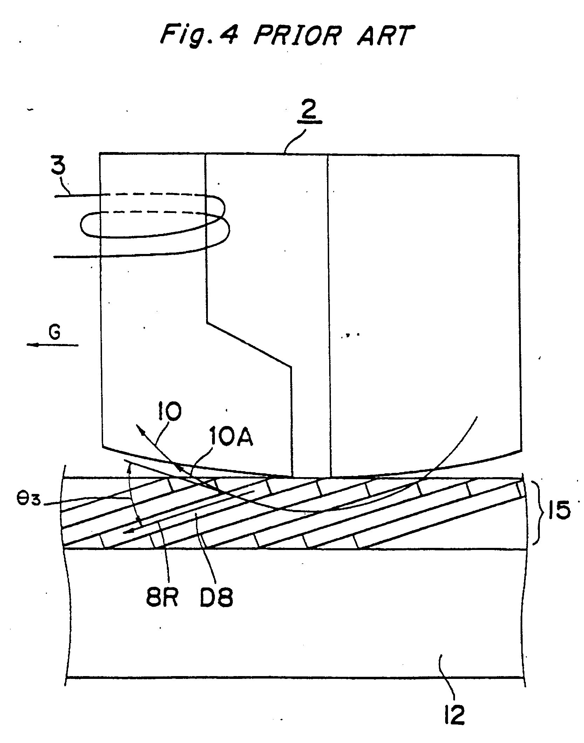

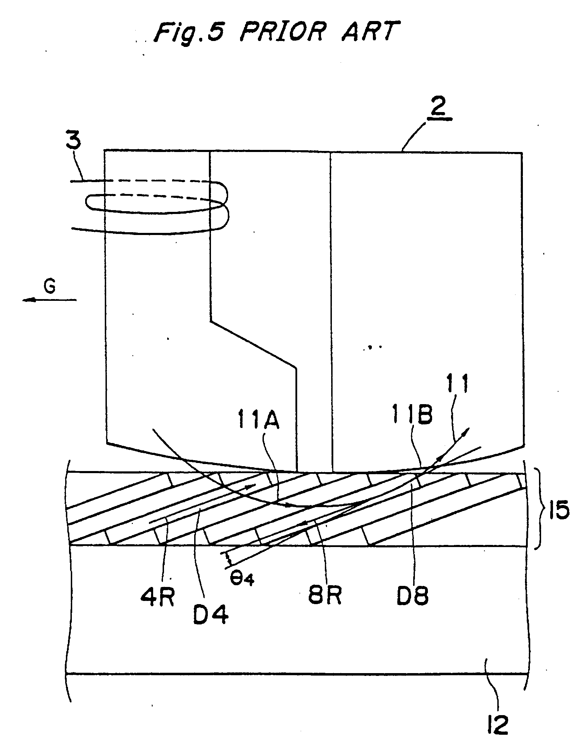

Referring now to Figs. 4 and 5, the case in which the magnetic head 2 moves in a direction counter to that described above will be discussed. In Fig. 4, a magnetic field 10A of a leakage magnetic field 10 emanating from the magnetic head 2 moving in the direction counter to that described hereinbefore, which is on a leading side of the magnetic head 2, records on a minute magnetic particle D8, shown in Fig. 4, in a direction shown by an arrow 8R. At this time, the angle ϑ3 of intersection between the magnetic field 10A and the minute magnetic particle D8 is greater than the previously discussed intersection angle ϑ1 and, therefore, the recording on the minute magnetic particle D8 is weaker than that on the minute magnetic particle D3.

Let it be assumed that, when the magnetic head 2 is subsequently moved to the position shown in Fig. 5, the direction of flow of the electric current across the coil 3 is reversed to produce a leakage magnetic field 11 counter to the leakage magnetic field 10 referred to above.

Under these circumstances, a magnetic field 11A of the leakage magnetic field 11 on the leading side records a minute magnetic particle D4 in a direction shown by an arrow 4R in Fig. 5. On the other hand, a magnetic field 11B of the leakage magnetic field 11 on the trailing side acts on the minute magnetic particle D8 in a direction counter to the direction 8R in which the minute magnetic particle D8 can be magnetized. At this time, an angle ϑ4 between the magnetic field 11B and the easily magnetizable direction of the minute magnetic particle D8 is less than the intersection angle ϑ₂ referred to above and, therefore, the minute magnetic particle D8 is more considerably degaussed than the minute magnetic particle D3.

Accordingly, in the case where the magnetic head 2 travels in a direction shown by an arrow G, since the recording is relatively weak as compared with that made during the travel thereof in the direction shown by the arrow F and the degaussing is enhanced, no strong recording is retained and a reproduced output tends to be low.

The foregoing appears to be the mechanism explaining why differences occurred in the manner in which information is recorded, particularly when the longitudinal magnetic recording medium is employed.

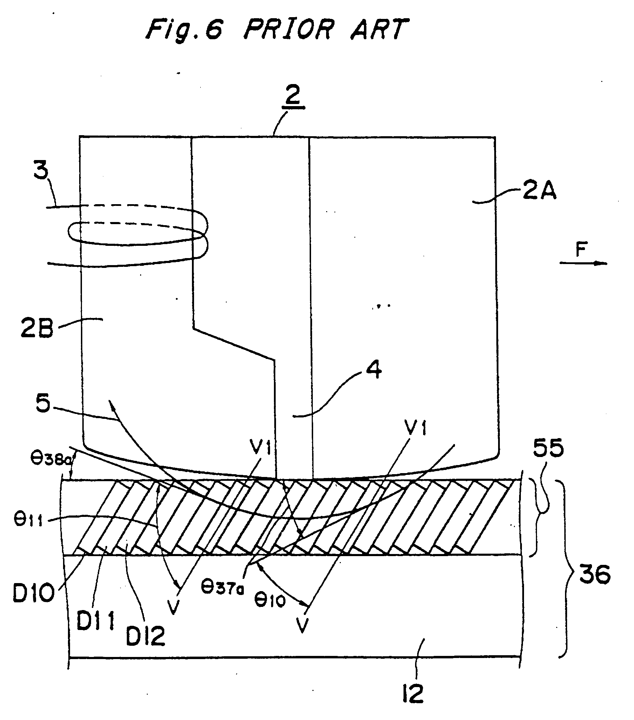

Fig. 6 depicts a condition in which, with the use of the conventional magnetic head, a recording is made on a perpendicular magnetic recording medium. In Fig. 6, functional parts alike those hereinbefore discussed are designated by like reference numerals.

In Fig. 6, reference characters D10, D11, D12, ... represent respective minute magnetic particles made of a Co-Cr alloy formed by the use of a vacuum deposition technique and having respective easily magnetizable directions in associated directions V-V1. A perpendicular magnetic recording layer 55 made up of an aggregate of those minute magnetic particles is formed on a substrate to complete the perpendicular magnetic recording medium 36.

The easily magnetizable direction of the perpendicular magnetic recording medium lies in a direction generally perpendicular to the direction of movement of the magnetic head relative to the magnetic recording medium, that is, the direction in which a surface of the magnetic recording medium lies. However, since this arrangement does not always bring advantages in the case of a ring-type magnetic head including a leakage magnetic field component extending in a horizontal direction, the easily magnetizable direction is chosen inclined from the vertical direction.

Even the perpendicular magnetic recording medium shown in Fig. 6 is generally considered as having similar problems hitherto discussed in connection with the longitudinal recording medium.

JP-A- 63168805 discloses a magnetic head for longitudinal recording in which an acute angle is formed on a leading side thereof between a recording gap and a direction of movement of the head.

Japanese Patent Laid-open Application (unexamined) No. 1-320614 discloses a magnetic head in which an acute angle is formed on a leading side thereof between a recording gap and a direction of movement of the magnetic head relative to a magnetic recording medium, thereby making the direction of a leakage magnetic field further approach a direction perpendicular to the direction of movement of the magnetic head so that the recording efficiency may be enhanced.

Japanese Patent Laid-open Application (unexamined) No. 2-35623 discloses a painted type perpendicular magnetic recording medium in which plate-shaped magnetic particles are inclined so that a predetermined angle may be formed between an easily magnetizable axis of each of the magnetic particles and a direction perpendicular to the direction of movement of a magnetic head.

### SUMMARY OF THE INVENTION

Accordingly, the present invention has been developed with a view to substantially eliminating the above discussed problems and is intended to provide an improved magnetic head and a magnetic recording and reproducing method both of which are not affected by the direction of movement of the magnetic head, exhibiting an excellent recording characteristic.

In the case of the perpendicular magnetic recording, the recording gap of the magnetic head is inclined from the direction perpendicular to the direction of movement of the magnetic head relative to the magnetic recording medium so as to form an obtuse angle between the direction of movement of the magnetic head and the recording gap on the leading side of the magnetic head, and an angle between the direction of movement of the magnetic head and the easily magnetizable direction on the leading side of the magnetic head is selected to be within the range of 45° to 90°.

Preferably, in the perpendicular magnetic recording, a pair of thin layers of magnetic material are formed on respective internal surfaces of a pair of opposed core members defining the recording gap therebetween. In this case, the then layer on the leading side of the recording gap is made thicker than that on the trailing side, and each of the thin layers has a saturated magnetic flux density higher than that of the core members.

Also, in order to accomplish the foregoing object of the present invention, a magnetic head herein disclosed comprises a pair of core members disposed in opposition to each other so as to define a recording gap therebetween. This recording gap is inclined a predetermined angle from a direction perpendicular to the direction of movement of the magnetic head relative to the magnetic recording medium so as to form an obtuse angle between the direction of movement of the magnetic head and the recording gap on the leading side thereof. A pair of thin layers of magnetic material having a saturated magnetic flux density higher than that of the core members are formed on respective internal surfaces of the core members, and the thin layer on the leading side of the magnetic head is thicker than that on the trailing side. An angle between the direction of movement of the magnetic head and the easily magnetizable axis on the leading side of the magnetic head is selected to be within the range of 45° to 90°.

According to the present invention, an angle formed between the direction of a leakage magnetic field on the leading side during a recording performed by the magnetic head, and the easily magnetizable axis of the magnetic recording medium can be minimized to allow the angle between the direction of the leakage magnetic field on the trailing side and the easily magnetizable axis of the magnetic recording medium to approach 90°. Therefore, the magnetic recording and reproducing characteristic can be advantageously improved.

### BRIEF DESCRIPTION OF THE DRAWINGS

This and other objects and features of the present invention will become more apparent from the following description taken in conjunction with the preferred embodiment thereof with reference to the accompanying drawings, throughout which like parts are designated by like reference numerals, and wherein:
Fig. 1 is a schematic sectional view of a conventional ME tape;
Figs. 2, 3a, 4, 5, and 6 are schematic sectional views of a conventional magnetic head and the ME tape of Fig. 1, which are explanatory of a conventional magnetic recording method;
Fig. 3b is a schematic sectional view of a minute magnetic particle, on an enlarged scale, which is explanatory of an interaction between the minute magnetic particle and a leakage magnetic field;
Fig. 7 is a schematic sectional view of a magnetic head according to a first embodiment of the present invention; and
Fig. 8 is a view similar to Fig. 7 according to a second embodiment of the present invention.

### DETAILED DESCRIPTION OF THE PREFERRED EMBODIMENTS

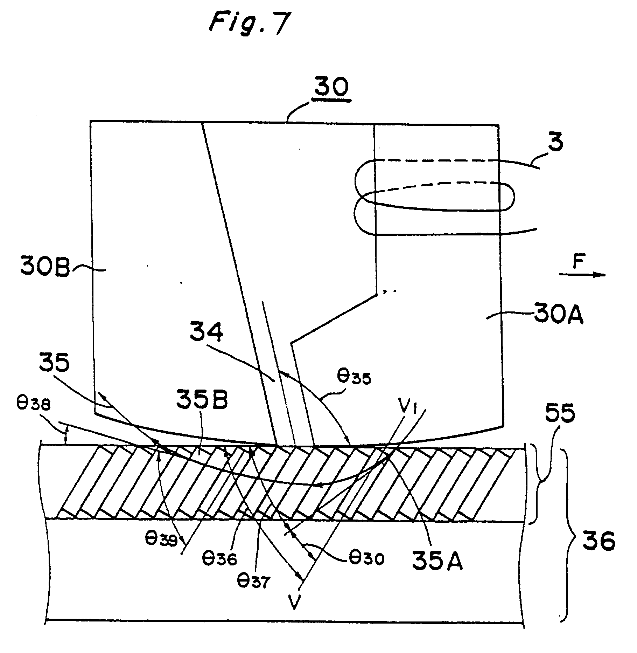

Fig. 7 depicts a magnetic head 30 according to a first embodiment of the present invention which can record information on a perpendicular magnetic recording medium at a stronger level than the conventional magnetic head.

The magnetic head 30 comprises a pair of cores 30A and 30B and a coil 3 wound around the core 30A and has a recording gap 34 defined between the cores 30A and 30B.

When the magnetic head 30 as a whole is moved in a direction shown by an arrow F relative to a magnetic recording medium 36, the recording gap 34 forms an obtuse angle ϑ35 on the leading side of the magnetic head 30 with respect to the direction of movement thereof relative to the magnetic recording medium 36 while an angle ϑ36 between an easily magnetizable axis V-V1 of a magnetic recording layer 55 and the aforementioned direction ranges from 45° to 90° on the leading side of the magnetic recording medium 36.

When the recording gap 34 is inclined from a direction perpendicular to the direction of movement thereof relative to the magnetic recording medium 36 and when the coil 3 is electrically energized, a leakage magnetic field 35 is produced as shown in Fig. 7. In this event, an angle ϑ37 between the aforementioned direction and a leakage magnetic field 35A produced on the leading side of the magnetic head 30 becomes greater than an angle ϑ37a in the conventional magnetic head of Fig. 6 whereas an angle ϑ30 between the easily magnetizable axis V-V1 and the leakage magnetic field 35A becomes less than an angle ϑ10 in the conventional magnetic head of Fig. 6.

Furthermore, an angle ϑ38 between the aforementioned direction and a leakage magnetic field 35B produced on the trailing side becomes less than an angle ϑ38a in the conventional magnetic head of Fig. 6. Because an angle ϑ11 shown in Fig. 6 is close to 90°, even if ϑ38 changes from ϑ38a to some extent, this change exerts only small influence upon the degaussing.

Accordingly, the magnetic head 30 referred to above can also provide a stronger recording than the conventional magnetic head 2 shown in Fig. 6.

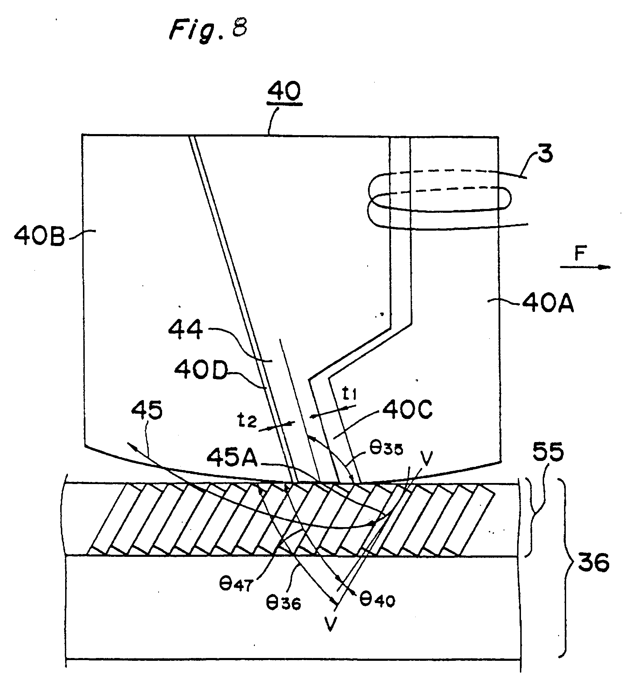

Fig. 8 depicts a magnetic head 40 according a second embodiment of the present invention whereby the recording on a perpendicular magnetic recording medium can be performed stronger than the magnetic head 30 according to the first embodiment of the present invention.

The magnetic head 40 comprises a pair of cores 40A and 40B made of, for example, ferrite, a pair of thin layers 40C and 40D formed on internal surfaces of respective cores 40A and 40B by sputtering or the like, and a coil 3 wound around the core 40A and the layer 40C. The layers 40C and 40D are each a layer of magnetic material having a saturated magnetic flux density higher than that of ferrite and have thicknesses of t1 and t2, respectively. The magnetic head 40 has a recording gap 44 defined between the layers 40C and 40D and is of the so-called MIG (Metal-In-Gap) structure.

Metallic magnetic material such as, for example, sendust, amorphous alloy, or the like is generally utilized as a material of the layers 40C and 40D. The thickness t1 of the layer 40C is greater than the thickness t2 of the layer 40D, which is greater than or equal to zero. Because the layer 40C formed on the leading side of the magnetic head 40 is thicker than the layer 40D formed on the trailing side, magnetic flux is produced across the magnetic recording layer 55 closer to the layer 40C.

As a result, an angle ϑ47 between the direction of movement of the magnetic head 40 relative to the magnetic recording medium 36 and a leakage magnetic field 45A on the leading side of a leakage magnetic field 45 produced at the time the coil 3 is electrically energized becomes greater than the angle ϑ37 shown in Fig. 7 whereas an angle ϑ40 between the easily magnetizable axis and the leakage magnetic field 45A on the leading side becomes less than the angle ϑ30 shown in Fig. 7.

Accordingly, the magnetic head 40 of Fig. 8 can provide a stronger recording than that of Fig. 7, thereby enabling a stronger recording to be retained on the magnetic recording medium 36.

Alternatively, the structure of Fig. 6, in which the recording gap 4 is formed in a direction generally perpendicular to the direction of movement thereof relative to the magnetic recording medium 36, may be further provided with a pair of thin layers of magnetic material formed on internal surfaces of respective cores 2A and 2B and having a high saturated magnetic flux density. In this case also, the magnetic material layer on the leading side is required to be thicker than that on the trailing side, thereby making it possible to enlarge the angle ϑ37a and to reduce the angle ϑ10, as is the case with the embodiment of Fig. 8. Such a structure can also provide a stronger recording than the structure of Fig. 6.

As is clear from the above text, a magnetic recording method according to the present invention can reduce the degaussing and can strengthen the recording, thereby enabling a stronger recording to be retained on a magnetic recording medium.

Furthermore, by the use of a magnetic head according to the present invention, the recording can be performed on a magnetic recording medium at a stronger level.

Accordingly, the present invention can realize a high density recording.

## Claims

1. A magnetic recording and reproducing method suited for recording and reproducing information on or from a magnetic recording medium (36) having an easily magnetizable axis (V-V1) extending in or slightly inclined from a direction generally perpendicular to a direction of movement (F) of a ring-type magnetic head (30, 40) relative to the magnetic recording medium (36), characterized by
inclining a recording gap (34, 44) of the magnetic head (30, 40) from a direction perpendicular to the direction of movement (F) of the magnetic head (30, 40) so as to form an obtuse angle (ϑ35) between the direction of movement (F) of the magnetic head (30, 40) and the recording gap (34, 44) on the leading side of the magnetic head (30, 40); and
selecting an angle (ϑ36) between the direction of movement (F) of the magnetic head (30, 40) and the easily magnetizable axis (V-V1) on the leading side of the magnetic head (30, 40) to be within the range of 45° to 90°.

2. The method according to claim 1,
further comprising the step of forming a pair of thin layers (40C, 40D) of magnetic material on respective internal surfaces of a pair of opposed core members (40A, 40B) defining said recording gap (44) therebetween, wherein the thin layer (40C) on the leading side of said recording gap (44) is thicker than the thin layer (40D) on the trailing side and wherein each of said thin layers (40C, 40D) has a saturated magnetic flux density higher than that of said core members (40A, 40B).

3. Apparatus including a ring-type magnetic head (40) and a magnetic recording medium (36) for recording and reproducing information on or from the magnetic recording medium (36) having an easily magnetizable axis (V-V1) extending in or slightly inclined from a direction generally perpendicular to a direction of movement (F) of the magnetic head (40) relative to the magnetic recording medium (36), said magnetic head (40) comprising a pair of core members (40A, 40B) disposed in opposition to each other so as to define a recording gap (44) therebetween, said recording gap (44) being inclined a predetermined angle from a direction perpendicular to the direction of movement of the magnetic head (40)
characterised in that:
said recording gap is inclined so as to form an obtuse angle (ϑ35) between the direction of movement (F) of the magnetic head (40) and the recording gap (44) on the leading side thereof;
a pair of thin layers (40C, 40D) of magnetic material are formed on respective internal surfaces of said core members (40A, 40B), said layers having a saturated magnetic flux density higher than that of said core members (40A, 40B), the thin layer (40C) on the leading side of the magnetic head (40) being thicker than the thin layer (40D) on the trailing side; and
an angle (ϑ36) between the direction of movement (F) of the magnetic head (40) and the easily magnetizable axis (V-V1) on the leading side of the magnetic head (40) is selected to be within the range of 45° to 90°.

## Patentansprüche

1. Magnetisches Aufnahme- und Wiedergabeverfahren, das geeignet ist zum Aufnehmen und Wiedergeben von Informationen auf oder von einem magnetischen Aufnahmemedium (36) mit einer leicht magnetisierbaren Achse (V-V1), die sich gewöhnlich in oder gering geneigt aus einer Richtung senkrecht zur relativen Bewegungsrichtung eines Ringmagnetkopfes (30, 40) zum magnetischen Aufnahmemedium (36) erstreckt, gekennzeichnet durch
Neigung eines Aufnahmespaltes (34, 44) des Magnetkopfes (30, 40) aus einer Richtung, senkrecht zur Bewegungsrichtung (F) des Magnetkopfes (30, 40), so daß sich ein stumpfer Winkel (ϑ35) zwischen der Bewegungsrichtung (F) des Magnetkopfes (30, 40) und dem Aufnahmespalt (34, 44) auf der Vorlaufseite des Magnetkopfes (30, 40) bildet; und Auswählen eines Winkels (ϑ36) zwischen der Bewegungsrichtung (F) des Magnetkopfes (30, 40) und der leicht magnetisierbaren Achse (V-V1) auf der Vorlaufseite des Magnetkopfes (30, 40) in dem Bereich von 45° bis 90°.

2. Verfahren nach Anspruch 1, das ferner den Schritt einer Ausbildung eines Paars aus dünnen Schichten (40C, 40D) aus magnetischem Material auf den entsprechenden inneren Flächen eines Paars von entgegenliegenden Kernelemente (40A, 40B), die den Aufnahmespalt (44) zwischen sich festlegen, wobei die dünne Schicht (40C) auf der Vorlaufseite des Aufnahmespaltes (44) dicker ist als die dünne Schicht (40D) auf der Nachlaufseite und wobei jede der dünnen Schichten (40C, 40D) eine gesättigte Magnetflußdichte größer als die der Kernelemente (40A, 40B) aufweist.

3. Einrichtung mit einem Ringmagnetkopf (40) und einem magnetischen Aufnahmemedium (36) zur Informations-Aufnahme und -Wiedergabe auf oder von dem magnetischen Aufnahmemedium (36), das eine leicht magnetisierbare Achse (V-V1) aufweist, die sich gewöhnlich in oder gering geneigt aus einer Richtung, senkrecht zu einer relativen Bewegungsrichtung (F) des Magnetkopfes (40) erstreckt, wobei der Magnetkopf (40) ein Paar Kernelemente (40A, 40B) die in Gegenstellung zueinander angeordnet sind, so daß sie einen Aufnahmespalt (44) zwischen sich festlegen, der Aufnahmespalt (44) in einem bestimmten Winkel aus einer Richtung senkrecht zur Bewegungsrichtung des Magnetkopfes (40) schräg gestellt ist,
dadurch gekennzeichnet, daß der Aufnahmespalt so schräg gestellt ist, daß er einen stumpfen Winkel (ϑ35) zwischen der Bewegungsrichtung (F) des Magnetkopfes (40) und dem Aufnahmespalt (44) auf dessen Vorlaufseite bildet;
daß ein Paar dünner Schichten (40C, 40D) aus magnetischem Material auf entsprechenden inneren Flächen der Kernelemente (40A, 40B) ausgebildet sind, die Schichten eine gesättigte magnetische Flußdichte größer als die der Kernelemente (40A, 40B) aufweisen, die dünne Schicht (40C) auf der Vorlaufseite des Magnetkopfes (40) dicker ist als die dünne Schicht (40D) als auf der Nachlaufseite; und daß ein Winkel (ϑ36) zwischen der Bewegungsrichtung (F) des Magnetkopfes (40) und der leicht magnetisierbaren Achse (V-V1) auf der Vorlaufseite des Magnetkopfes (40) innerhalb des Bereiches von 45° bis 90° liegt.

## Revendications

1. Procédé d'enregistrement et de reproduction magnétique convenant pour enregistrer et reproduire une information sur ou à partir d'un support d'enregistrement magnétique (36) présentant un axe aisément magnétisable (V-V1) s'étendant selon une direction géneralement perpendiculaire à une direction de déplacement (F) d'une tête magnétique du type anneau (30, 40) par rapport au support d'enregistrement magnétique (36) ou légèrement inclinée par rapport à cette direction, caractérisé par :
l'inclinaison d'un entrefer d'enregistrement (34, 44) de la tête magnétique (30, 40) par rapport à une direction perpendiculaire à la direction de déplacement (F) de la tête magnétique (30, 40) de manière à former un angle obtus (Θ35) entre la direction de déplacement (F) de la tête magnétique (30, 40) et l'entrefer d'enregistrement (34, 44) sur le côté d'attaque de la tête magnétique (30, 40 ) ; et
la sélection d'un angle (Θ36) formé entre la direction de déplacement (F) de la tête magnétique (30, 40) et l'axe aisément magnétisable (V-V1) sur le côté d'attaque de la tête magnétique (30, 40) de manière à ce qu'il soit compris dans la plage de 45° à 90°.

2. Procédé selon la revendication 1, comprenant en outre l'étape de formation d'une paire de couches minces (40C, 40D) en un matériau magnétique sur des surfaces internes respectives d'une paire d'éléments de noyau opposés (40A, 40B) définissant ledit entrefer d'enregistrement (44) entre eux, la couche mince (40C) située sur le côté d'attaque dudit entrefer d'enregistrement (44) étant plus épaisse que la couche mince (40D) située sur le côté de fuite et chacune desdites couches minces (40C, 40D) présentant une densité de flux magnétique saturé supérieure à celle desdits éléments de noyau (40A, 40B).

3. Appareil incluant une tête magnétique du type anneau (40) et un support d'enregistrement magnétique (36) pour enregistrer et reproduire une information sur ou à partir du support d'enregistrement magnétique (36) comportant un axe aisément magnétisable (V-VI) s'étendant selon une direction généralement perpendiculaire à une direction de déplacement (F) de la tête magnétique (40) par rapport au support d'enregistrement magnétique (36) ou légèrement inclinée par rapport à cette direction, ladite tête magnétique (40) comprenant : une paire d'éléments de noyau (40A, 40B) disposés de manière à se faire face l'un l'autre de manière à définir un entrefer d'enregistrement (44) entre eux, ledit entrefer d'enregistrement (44) étant incliné d'un angle prédéterminé par rapport à une direction perpendiculaire à la direction de déplacement de la tête magnétique (40),
caractérisé en ce que ledit entrefer d'enregistrement est incliné de manière à former un angle obtus (Θ35) entre la direction de déplacement (F) de la tête magnétique (40) et l'entrefer d'enregistrement (44) sur son côté d'attaque ;
une paire de couches minces (40C, 40D) en un matériau magnétique sont formées sur des surfaces internes respectives desdits éléments de noyau (40A, 40B), lesdites couches présentant une densité de flux magnétique saturé supérieure à celle desdits éléments de noyau (40A, 40B), la couche mince (40C) située sur le côté d'attaque de la tête magnétique (40) étant plus épaisse que la couche mince (40D) située sur le côté de fuite ; et
un angle (Θ26) entre la direction de déplacement (F) de la tête magnétique (40) et l'axe aisément magnétisable (V-VI) sur le côté d'attaque de la tête magnétique (40) est choisi de manière à s'inscrire dans la plage de 45° à 90°.
